# FASCICULE DE BREVET EUROPEEN

(11) **EP 2 146 899 B1**
(45) Date de publication et mention de la délivrance du brevet: **19.04.2017**
(21) Numéro de dépôt: 08759643.3
(22) Date de dépôt: 15.05.2008
(51) Int. Cl.: B64G 1/60

(54) **SIEGE DE VEHICULE SPATIAL ET VEHICULE SPATIAL EQUIPE DE CE SIEGE**
RAUMFAHRZEUGSITZ UND MIT DIESEM SITZ AUSGESTATTETES RAUMFAHRZEUG
SPACECRAFT SEAT AND SPACECRAFT EQUIPPED WITH SUCH SEAT

(30) Priorité: 15.05.2007 FR 0755087
(43) Date de publication de la demande: 27.01.2010
(73) Titulaire: Airbus Safran Launchers SAS, 75015 Paris (FR); Eads Sogerma, 33700 Merignac (FR)
(72) Inventeur: BERTRAND, Jérôme, F-33160 Saint Aubin De Medoc (FR); AUGER, Valéry, F-33460 Arsac (FR); VERNY, Christian, F-17620 Champagne (FR); BECHET, Dominique, F-17430 Moragne (FR)
(74) Mandataire: Ilgart, Jean-Christophe
(86) Numéro de dépôt international: PCT/EP2008/055985
(87) Numéro de publication internationale: WO 2008/142002

(56) Documents cités:
- DE-A1- 4 337 019
- DE-A1- 10 108 741
- ES-A1- 2 184 564
- ES-U- 1 063 217
- US-A- 2 712 849
- US-A- 4 175 723

## Description

Le sujet de l'invention est un véhicule spatial équipé d'une pluralité de sièges véhicule spatial équipé d'une pluralité de sièges de passagers.

On cherche ici à réduire les effets des accélérations sur les occupants des sièges. Ce problème apparaît notamment dans le transport spatial, que ce soit pour des fusées ou des avions spatiaux (capables de vols hors de l'atmosphère, pouvant ainsi s'élever à 100 km d'altitude environ, par exemple). L'accélération peut atteindre de 5 à 10g pendant plusieurs dizaines de secondes lors des phases de décollage ou de retour. Si les exigences de confort sont moins nécessaires à l'égard de pilotes professionnels, qui sont jusqu'à présent presque les seuls à avoir participé aux vols spatiaux, les prévisions d'extension de ceux-ci au transport de passagers ordinaires ou même au tourisme rendent nécessaires des perfectionnements aux aménagements existants, soit pour donner un confort meilleur dans les vols existants, soit pour permettre des vols à des accélérations plus élevées que celles qui sont prévues aujourd'hui, soit pour offrir une marge de sécurité plus large en prévision de circonstances imprévues comme des accidents.

Tel est un objectif de l'invention. Cet objectif est pleinement atteint avec des aménagements originaux de l'habitacle et de la disposition des sièges du véhicule spatial, et notamment d'un avion spatial, c'est-à-dire d'un aéronef ayant l'aspect général d'un avion classique mais conçu pour atteindre les limites de l'atmosphère ou de les dépasser, et qui peut par exemple compter une propulsion fusée pour lui donner les accélérations nécessaires.

Il est bien connu que l'Homme résiste mieux aux accélérations orientées dans la direction antéro-postérieure du corps qu'en direction de sa hauteur, la colonne vertébrale étant moins chargée pour une valeur égale d'accélération, et que la posture recroquevillée du corps est plus avantageuse qu'une posture allongée dans une direction défavorable. Plusieurs documents exposent des conceptions de sièges destinés à exploiter ces circonstances pour améliorer la résistance aux accélérations en modifiant la forme ou la position de sièges ordinaires. Un des premiers pourrait être le document US 2 304 781 qui mentionne déjà l'intérêt d'orienter le corps perpendiculairement à l'accélération et qui expose un siège déformable entre une position assise verticale, utilisée dans des circonstances ordinaires, et une position couchée complètement étendue sur le dos utilisée dans de fortes accélérations. La position recroquevillée est exploitée dans le document US 4 301 983. Dans le document US 5 064 146, l'occupant du siège est maintenu dans une posture invariable moyenne entre l'extension et la recroquevillée, mais l'inclinaison du siège varie de manière à présenter le corps à l'orientation la plus favorable.

D'autres documents (US 4 243 024, US 2006/0237586 et US 2006/0145021) traitent d'autres aménagements pour améliorer le confort du vol à l'encontre des accélérations ou des vibrations, soit par une combinaison anti-g, soit par des aménagements particuliers des sièges.

Les dispositifs impliquant des modifications de la forme ou de l'orientation des sièges de cette revue de l'art antérieur sont toutefois tous relatifs à des avions atmosphériques et sont destinés à leurs pilotes. Ces conceptions n'ont pas été reprises pour des véhicules spatiaux : les fusées à lancement vertical comportent des couchettes fixes où les passagers sont maintenus couchés pendant les phases de fortes accélérations.

Des sièges à inclinaison variable ont été proposés pour d'autres véhicules comme les automobiles. Le but recherché était encore d'améliorer le confort ou la sécurité du passager dans des conditions de conduite particulières ou à un accident. On peut citer le document ES - U - 1 063 217 dans lequel le siège est suspendu au châssis du véhicule par un cardan dont un axe de rotation est transversal (dans la direction gauche - droite du châssis) et un autre axe de rotation est dirigé vers l'avant du véhicule. Une rotation autour du premier de ces axes est appliquée pour ajuster l'inclinaison du conducteur quand il monte ou descend une côte, et autour du second de ces axes pour céder aux forces de Coriolis quand le véhicule tourne ou pour permettre de rester vertical quand le véhicule roule le long d'un plan incliné. La première rotation n'a donc pas pour but essentiel de placer le conducteur de manière que l'accélération qu'il subit soit dans la direction antéro-postérieure de son corps, et la deuxième rotation, faite autour d'un axe perpendiculaire à la colonne vertébrale, n'a pas du tout cet effet.

Le document DE - A - 43 37 019 décrit principalement un habitacle d'automobile tournant autour d'un axe transversal de manière à optimiser l'inclinaison du conducteur quand un choc se produit. Cet art antérieur de sièges tournants appliqués à l'automobile rejoint donc celui des avions en ce qu'il permet de placer le conducteur de manière que son corps reçoive la forte accélération consécutive à un accident dans une direction antéro-postérieure. La plupart des systèmes à sièges tournants pour automobiles ne sont toutefois pas directement applicables aux véhicules spatiaux, puisqu'ils sont conçus par des conditions de conduite normales où les accélérations sont trop faibles pour menacer la santé des occupants ; de plus, les inclinaisons des sièges, concernant avant tout le conducteur, doivent être commandées de manière à maintenir la capacité de conduire, ce qui impose des systèmes électriques et mécaniques dont l'inertie est à éviter pour des véhicules spatiaux soumis à des variations importantes et rapides de direction d'accélération mais avec une intensité d'accélération élevée.

On a cherché à trouver une bonne disposition de sièges pour les appliquer plus particulièrement aux véhicules spatiaux et à des passagers préoccupés de confort et même d'agrément de vol et qui ne participent pas au pilotage de l'appareil. On a aussi gardé à l'esprit le besoin d'aménager de façon économique la cabine du véhicule, de façon que ces passagers retenus sur les sièges ne soient pas séparés de distances trop importantes. On a donc renoncé aux conceptions où le siège permet de modifier la posture de l'occupant entre une posture étendue, assise ou allongée, et une posture recroquevillée, à cause du manque de confort qu'un tel changement de posture procurerait. On a aussi renoncé aux dispositifs classiques où le siège est tournant autour d'un axe transversal de manière à faire varier l'inclinaison de l'occupant : si cette solution est efficace pour réduire l'accélération la plus dangereuse, le long du corps de l'occupant, elle nécessite un grand espace entre les sièges voisins et elle est déplaisante pour les passagers, qui ressentent fortement, de façon visuelle, leur changement d'inclinaison dans le véhicule.

Un tel dispositif est toutefois décrit dans le document US 4,137,723 qui est considéré comme le document de l'art antérieur le plus proche.

Pour résumer, il a été retenu un fauteuil rigide mais pivotant autour d'un axe sensiblement longitudinal en direction de la hauteur de l'occupant qui y est assis ou étendu, plutôt que transversal. Cette disposition ne recourt ni à un changement de posture ni à une variation d'inclinaison de l'occupant dans l'habitacle, du moins dans les réalisations les plus simples de l'invention ; mais elle permet toutefois de placer le corps du passager à une orientation favorable dans des circonstances caractéristiques des vols d'avions spatiaux.

Sous un aspect général, l'invention concerne ainsi un véhicule spatial selon la revendication 1, ledit véhicule comprenant dans un habitacle une pluralité de sièges comprenant chacun une coque rigide s'étendant des pieds à la tête d'un occupant du siège, au moins une pièce d'axe à engager dans une structure de support, la pièce d'axe est orientée dans une direction d'alignement essentiellement parallèle à une direction longitudinale de l'occupant et reliée à la coque de sorte que l'occupant soit au moins essentiellement placé entre la coque et la direction d'alignement de la pièce d'axe ; la direction d'alignement de la pièce d'axe est essentiellement perpendiculaire à la direction longitudinale du véhicule spatial ; et lesdits sièges sont alignés dans l'habitacle dans la direction longitudinale du véhicule spatial en une rangée unique, et disposés symétriquement par moitiés par rapport à un plan longitudinal, vertical et bissecteur de l'habitacle.

La structure de support peut comprendre un curseur mobile sur une piste fixée dans le véhicule, le curseur étant retenu sur la piste. Un tel dispositif optionnel rétablit la possibilité de modifier l'inclinaison de l'occupant dans l'habitacle, à l'instar de solutions déjà connues, et la double rotation du siège qui est alors possible place l'occupant encore mieux perpendiculairement à l'accélération.

On choisira en général le siège avec une forme de coque enveloppant le corps du passager avec une bordure latérale sur tout son pourtour ou la plus grande partie pour le mieux retenir, tout en le protégeant par le rembourrage qui le garnira en général. Le siège sera normalement libre de tourner pour suivre les accélérations imprévues, et donc dépourvu de commande de rotation ; un amortisseur pourra toutefois être ajouté pour donner de l'inertie à ses mouvements, ainsi qu'un mécanisme de blocage, mais qui sera seulement actif à l'arrêt du véhicule, pour faciliter l'embarquement et le débarquement des passagers.

Il est avantageux que dans un tel véhicule, la direction d'alignement de la pièce d'axe soit essentiellement perpendiculaire à la direction longitudinale du véhicule spatial, permettant un aménagement plus favorable dans lequel les sièges s'orientent de façon favorable (perpendiculaire à l'accélération) pendant les conditions normales de vol. De plus, les passagers peuvent être proches les uns des autres, généralement tournés vers la paroi de l'habitacle et des hublots qui leur offrent le spectacle du vol. Les nécessités de remplir suffisamment l'habitacle et d'assurer le confort des passagers, qui sont soumis à des mouvements moins perceptibles que les changements d'inclinaison et jouissent plus facilement d'une vue extérieure agréable, sont respectées.

Notamment dans cette configuration des sièges et si les sièges autorisent la double rotation, les pistes où coulissent les curseurs de support des pièces d'axe des sièges peuvent comprendre une portion postérieure essentiellement verticale dans l'habitacle ; une portion inférieure essentiellement horizontale dans l'habitacle ; et éventuellement une portion antérieure oblique dans l'habitacle, jointe à la portion inférieure. Il est alors possible de faire évoluer l'orientation du passager d'une posture essentiellement verticale, ou du moins plutôt verticale qu'horizontale, à une posture essentiellement horizontale dans l'habitacle.

Dans un aménagement particulier et avantageux, la direction de la pièce d'axe fait un petit angle avec les plans de coupe transversaux du véhicule spatial. On offre à la fois ainsi une bonne facilité d'accès aux sièges tout en permettant une répartition équilibrée des masses dans l'habitacle du véhicule, et un meilleur aménagement du volume. Ce petit angle peut être inférieur à 25°. Il est avantageusement proche de 15°.

Dans un autre aménagement particulier et avantageux, l'inclinaison des sièges sur l'horizontale fait un angle de 25° à 40° environ, qui peut être de 35° environ.

L'invention sera maintenant décrite en liaison aux figures, dont :
- la figure 1 illustre un siège conforme à l'invention,
- les figures 2A, 2B, 2C et 2D, une autre réalisation de siège conforme à l'invention dans différents états,
- la figure 3, une disposition en perspective de sièges conformes à l'invention dans un habitacle d'avion spatial,
- les figures 4 et 5, deux vues en coupe d'habitacle d'avion spatial munis de sièges d'après la réalisation de la figure 1,
- et la figure 6 illustre un aménagement possible.

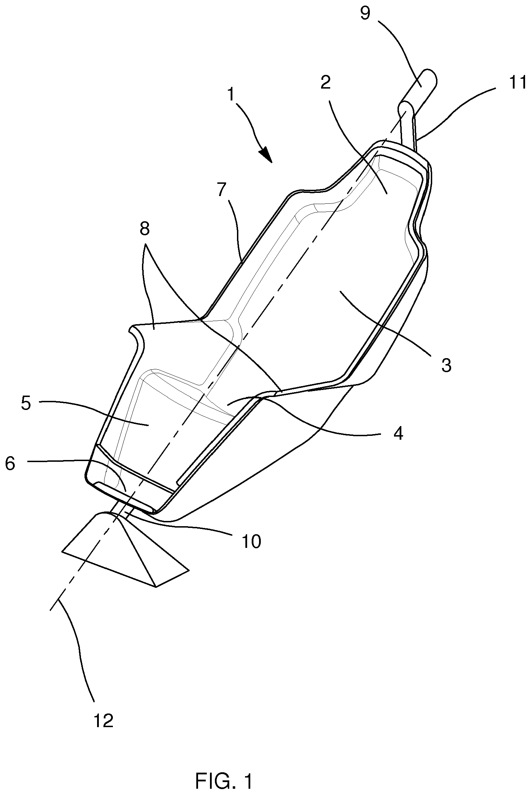

La figure 1 représente un siège utilisé dans l'invention. Il comprend une coque 1 rigide unique soutenant tout le corps de l'occupant et comprenant un appuie-tête 2, un dossier 3, un siège proprement dit 4 mettant l'occupant en position assise, un appuie-jambes 5 et un repose-pieds 6 de haut en bas, ainsi qu'une bordure 7 sur tout le pourtour et une paire d'accoudoirs 8 aux endroits idoines de la bordure 7. La coque 1, y compris la bordure 7, sont formées d'un rembourrage aidant à l'absorption des forces d'accélération et au confort de l'occupant, qui est retenu même contre les accélérations transversales. Il comprend aussi une paire de pièces d'axe 9 et 10 , la première au-dessus de la tête et la seconde au-dessous des pieds ; si celle-ci est reliée directement à la coque 1, et plus précisément à la bordure 7 sous le repose-pieds 6, celle-là est reliée à la bordure 7 sur l'appuie-tête 2 par un bras d'excentrement 11 dirigé vers l'avant de la tête de l'occupant et de la coque 1 et dont l'effet est de repousser l'axe d'alignement 12 des pièces d'axe 9 et 10 en avant de la plus grande partie du corps de l'occupant, sauf à l'endroit des jambes, ce qui fait que le centre de gravité de l'ensemble formé par le siège et par son occupant est décalé de l'axe d'alignement 12 ; les axes 9 et 10 sont montés en tournant librement ou à peu près dans la structure du véhicule spatial.

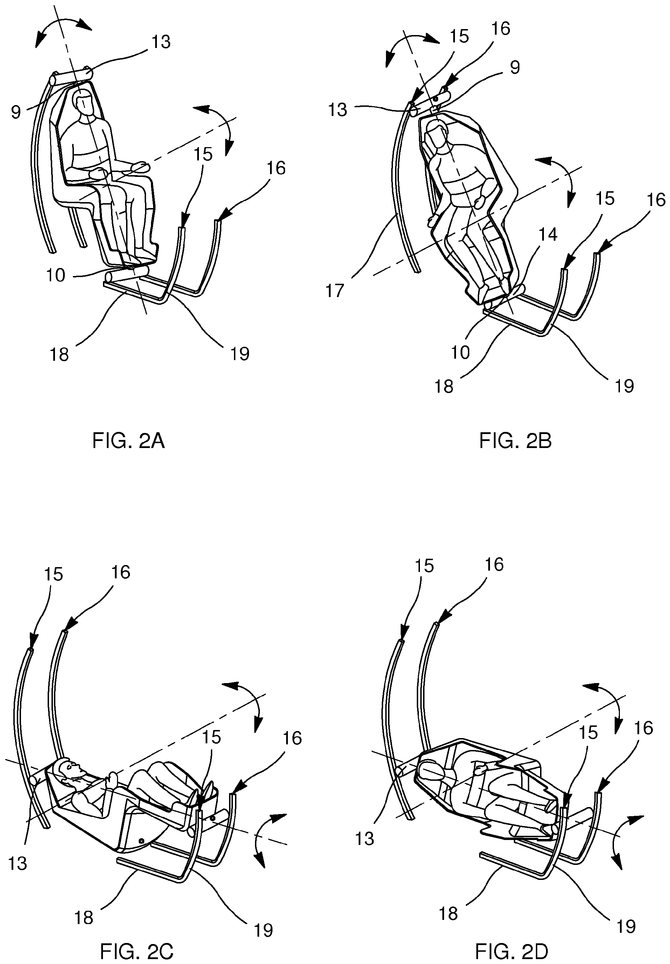

Un mode est illustré aux figures 2A, 2B, 2C et 2D. Le siège de la figure 1 à ses axes 9 et 10 qui peuvent être disposés dans des paliers fixes du véhicule, mais les axes de la réalisation des figures 2 sont logés au centre de curseurs composés ici d'une traverse supérieure 13 et d'une traverse inférieure 14 transversales aux sièges, parallèles entre elles et dont les extrémités sont assujetties de façon glissante à des éléments de piste respectifs 15 et 16 dont chacun comporte ici une portion postérieure 17 essentiellement verticale mais inclinée vers l'arrière de l'occupant, une portion inférieure 18 essentiellement horizontale et une portion antérieure 19 oblique pouvant être essentiellement verticale mais inclinée vers l'avant de l'occupant. La portion postérieure 17 peut être isolée des autres, qui sont au contraire jointives en prolongement l'une de l'autre.

Cette disposition permet, à partir d'une position au repos illustrée à la figure 2A, des pivotements du siège d'après la figure 2B, une variation d'inclinaison au siège d'après la figure 2C, ou les deux d'après la figure 2D. L'occupant peut ainsi passer d'une position essentiellement verticale ou plutôt verticale qu'horizontale, avec la tête en haut, à une position tournée vers un côté ou l'autre et à des positions de plus en plus basculées vers l'arrière jusqu'à des positions essentiellement horizontales, grâce aux portions antérieures 19 des éléments de piste 15 et 16 qui permettent de soulever les pieds de l'occupant. Les efforts dus aux accélérations placent eux-mêmes l'occupant à l'orientation la plus favorable, perpendiculaire ou aussi perpendiculaire que possible à eux, grâce à ce que la position du centre de gravité du siège et de son occupant est décalée de la direction d'alignement 12 vers l'arrière, et les éléments de piste 15 et 16 sont inclinés sur la verticale dans des sens opposés (en s'éloignant l'un de l'autre vers le haut) aux portions antérieures 19, et postérieures 17, et sensiblement horizontales aux portions médianes 18, de sorte que les forces d'accélération dirigées dans le plan des éléments de piste 15 et 16 possèdent toujours des composantes faisant glisser le siège le long de la piste.

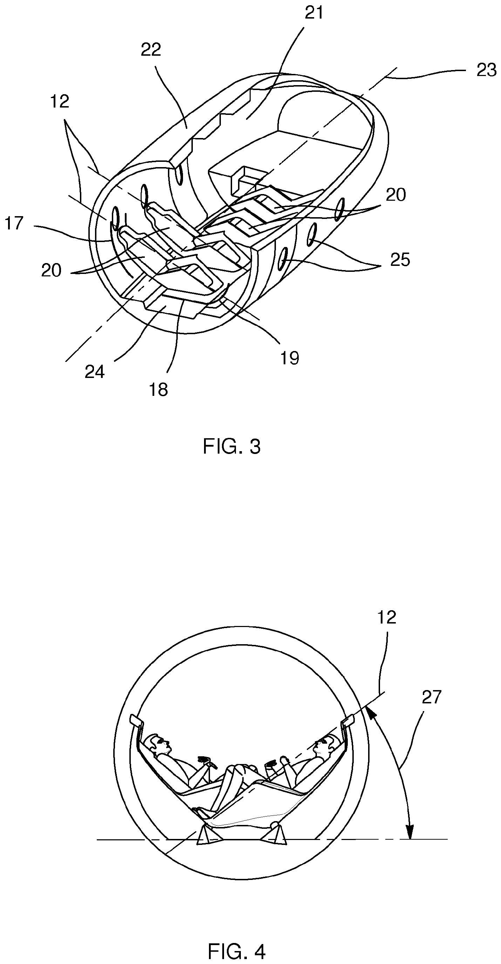

La figure 3 représente un aménagement possible d'avion spatial conforme à l'invention. Quatre sièges 20 sont placés dans un habitacle 21 de l'avion délimité par un fuselage 22 à peu près cylindrique, avec une orientation transversale, essentiellement perpendiculaire à la direction longitudinale 23 de l'avion, des directions d'alignement 12 des pièces d'axe. On remarquera que deux des sièges 20 sont placés en étant orientés vers un côté du fuselage, et les deux autres vers le côté opposé ; de même, deux des sièges 20 sont adossés à un des côtés du fuselage 22 et les deux autres au côté opposé. Cette répartition complètement symétrique des sièges 20 par rapport à un plan sagittal (longitudinal, vertical et bissecteur) de l'habitacle 21 garantit le maintien de l'équilibre des masses dans l'habitacle 21.

On a figuré des sièges conformes à la réalisation de la figure 2. Les portions postérieures 17 des éléments de piste 15 et 16 peuvent être placées sur le fuselage 22, les portions inférieures 18 sur le plancher 24 de l'habitacle 21, et les portions antérieures 19 peuvent être placées sur les côtés opposés du fuselage 22 ou, comme on l'a représenté ici, à distance de ceux-ci afin de laisser subsister un espace de passage plus important au pied des sièges 20.

Cette figure 3 permet de bien comprendre l'avantage apporté par l'invention. La plupart des accélérations fortes produites pendant un vol spatial sont orientées dans le plan sagittal de l'appareil, mais à des directions très variables avec des forces sur les occupants orientées vers l'arrière de l'appareil en cas d'augmentation simple de la vitesse ou obliquement quand une variation de la vitesse est conjointe à un mouvement de tangage ou à une variation d'altitude qui donne une composante verticale à l'accélération. Or le pivotement du siège autour des pièces d'axe 9 et 10 permet de suivre les variations de direction des forces dans le plan sagittal si la direction d'alignement 12 du siège est essentiellement perpendiculaire au plan sagittal ou du moins le coupe avec un grand angle ; et le mécanisme à basculement coulissant sur les éléments de piste 15 et 16 permet d'incliner le siège davantage, rendant l'occupant mieux perpendiculaire à ces forces dans le plan sagittal. Quoique aucune variation d'inclinaison ne soit possible avec le siège de la figure 1 (qui pourrait être utilisé dans la réalisation de la figure 3), son occupant subit donc seulement une faible intensité d'accélération dans la direction longitudinale de son corps, même si l'accélération est instaurée subitement, et le siège pivote autour de la direction d'alignement 12 de façon que l'accélération dans la direction transversale (gauche-droite) disparaisse. L'essentiel de l'accélération est donc ressenti dans la direction antéro-postérieure du corps. Cela est encore mieux vérifié avec le siège à double rotation de la figure 2.

On remarquera que, dans cette conception où les passagers font généralement face à un côté du fuselage 22, ils sont placés devant les hublots 25 qui leur permettent d'assister au vol dans les meilleures conditions.

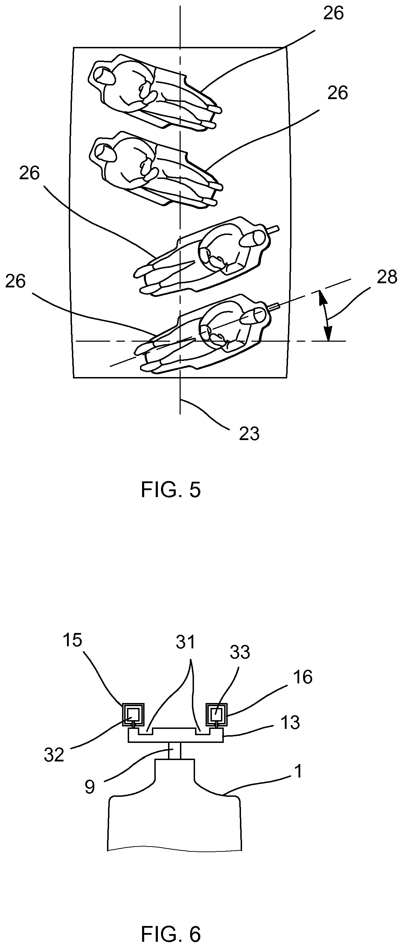

Les figures 4 et 5 représentent un autre aménagement possible, avec des sièges 26 placés sensiblement de la même façon que les précédents mais qui sont conformes à la réalisation de la figure 1 en autorisant une rotation simple. L'angle 27 d'inclinaison des directions d'alignement 12 des pièces d'axe est alors fixe et doit être choisi selon la spécification des vols pour minimiser les accélérations subies par les occupants ; une valeur de 35° environ d'inclinaison sur l'horizontale pour cet angle 27 peut donner de bons résultats, en réduisant beaucoup les efforts en direction longitudinale du corps que subit la colonne vertébrale tout en accordant une position agréable pendant le vol sans accélération ; des inclinaisons plus faibles sur l'horizontale peuvent réduire encore mieux ces efforts longitudinaux en raison de ce que les accélérations existent principalement dans le plan sagittal de l'appareil, mais le confort de l'occupant au décollage et en vol uniforme est moins bon et le siège occupe aussi plus d'espace transversal, ce qui nuit à l'aménagement, de sorte qu'un angle 27 relativement important peut être préféré. Et l'angle 28 que prennent les directions d'alignement 12 avec les sections droites du fuselage 22, ou par rapport à la perpendiculaire de la direction longitudinale 23, doit être faible pour donner la résistance nécessaire aux accélérations, mais il peut être non nul pour donner l'impression d'un volume plus important et pour améliorer l'accès aux différents sièges ; il peut être de 20° environ, en tout cas compris entre 15° et 25°. Les choix de ces deux angles résulteront donc de compromis entre des exigences contraires. Les valeurs données ici ne sont pas absolues, et d'autres peuvent se révéler meilleures avec d'autres spécifications.

Il faut souligner que la disposition habituelle des sièges des avions est vers l'avant (l'angle 28 étant égal à 90°) et que si des orientations transversales (l'angle 28 étant nul) ont été adoptées au moins dans des véhicules terrestres, des angles 28 assez faibles mais non nuls semblent nouveaux dans les véhicules et notamment les aéronefs.

La coque 1 du siège peut être garnie de tout revêtement aidant au confort et à l'absorption de chocs, comme du cuir, de la mousse ou les deux. Elle comprend aussi des ceintures de sécurité, des sangles ou d'autres dispositifs équivalents d'attache de l'occupant.

Un surcroît de résistance aux accélérations peut être apporté par une souplesse des supports des pièces d'axes 9 et 10, qu'ils soient fixés au véhicule ou sous forme de curseurs mobiles telles les traverses 13 et 14, et qui absorbe de l'énergie en se déformant. Une telle idée peut être appliquée surtout à l'amortissement de chocs accidentels importants, et une réalisation consisterait à aménager des points faibles dans les supports, comme des strictions de section qui subiraient alors des déformations permanentes.

On le représente à la figure 6, où la traverse 13 porte une paire de strictions 32 de part et d'autre de l'emplanture de la pièce d'axe 9, et où on a représenté aussi des galets 32 et 33 assujettis à la traverse 13 et logés de façon glissante dans des rails creux des éléments de piste 15 et 16. D'autres conceptions, impliquant par exemple des amortisseurs élastiques, restent possibles. La traverse 14 peut être conçue de la même façon.

On a vu que l'orientation du siège autour d'un ou des deux axes de rotation était ajustée automatiquement par les forces d'accélération, les mécanismes de commandes étant rejetés à cause de leur lourdeur et de leur inertie pouvant être excessive. Un mécanisme de blocage peut toutefois être ajouté, qui permet de maintenir le siège à une position de repos et que l'occupant libère dès qu'il est installé et attaché. Un frein (ou amortisseur) est aussi ajouté pour limiter la vitesse et l'ampleur des mouvements et empêcher des mouvements intempestifs, trop rapides, excessifs ou produits par des forces trop faibles ; il convient notamment d'éviter les tournoiements en toupie du siège. De tels freins peuvent être engagés entre les pièces d'axe 9 et 10, et entre les galets 32 et 33 et les rails des éléments de piste 15 et 16, pour produire des frottements.

Un genre de freins convenable pour un freinage léger comprend un boîtier empli d'huile et des ailettes fixées à une des pièces d'axe et brassant l'huile quand la pièce d'axe tourne pour produire un amortissement par les forces de viscosité. Un genre de freins convenable pour un freinage plus fort comprend des plaquettes repoussées sur la pièce d'axe par un ressort et frottant sur lui. Un troisième genre de freins utilisable est un vérin hydraulique, raccordé à la pièce d'axe par un bras de levier articulé au piston du vérin, qui se déplace dans de l'huile mais possède des positions de butée. Des systèmes composites peuvent être choisis, ou des freins débrayables, pour exercer des freinages différents selon les circonstances, notamment plus importants aux grandes vitesses de rotation, qui correspondent à des turbulences ou à d'autres états accidentels. Les freins hydrauliques possèdent d'ailleurs une telle progression de freinage. Tous les freins mentionnés, étant connus des techniciens, ne sont pas plus décrits ici.

L'occupant peut aussi être en position allongée dans le siège, qui ne comporte alors plus la partie 4. Le bras d'excentrement pourrait être remplacé par une autre portion de raccordement entre la pièce d'axe 9 correspondante et la coque 1, comme un prolongement incurvé de la coque 1.

## Revendications

1. Véhicule spatial, **caractérisé en ce qu'**il comprend dans un habitacle une pluralité de sièges comprenant chacun une coque (1) rigide s'étendant des pieds à la tête d'un occupant du siège, au moins une pièce d'axe (9, 10) à engager dans une structure de support, la pièce d'axe étant orientée dans une direction d'alignement (12) essentiellement parallèle à une direction longitudinale de l'occupant et reliée à la coque (1) par un raccord (11) dirigé de sorte que l'occupant soit au moins essentiellement placé entre la coque et la direction d'alignement de la pièce d'axe ; la direction d'alignement de la pièce d'axe est essentiellement perpendiculaire à la direction longitudinale du véhicule spatial ; et lesdits sièges sont alignés dans l'habitacle dans la direction longitudinale du véhicule spatial en une rangée unique, et disposés symétriquement par moitiés par rapport à un plan longitudinal, vertical et bissecteur de l'habitacle.

2. Véhicule spatial selon la revendication 1, **caractérisé en ce que** la coque de sièges est formée de sorte que l'occupant soit en position assise.

3. Véhicule spatial selon l'une quelconque des revendications 1 ou 2, **caractérisé en ce que** les sièges comprennent deux pièces d'axe (9, 10), les pièces d'axe étant alignées et placées à deux bouts opposés du siège dans la direction longitudinale de l'occupant.

4. Véhicule spatial selon l'une quelconque des revendications 1 à 3, **caractérisé en ce que** la structure de support de chacun des sièges comprend un curseur (13, 14) mobile sur une piste fixe dans le véhicule et retenu sur la piste.

5. Véhicule spatial selon la revendication 4, **caractérisé en ce que** le curseur mobile est une traverse allongée, la piste est double et formée de deux éléments (15, 16) parallèles, la traverse recevant un des axes lisses dans une portion de mi-longueur et étant respectivement retenue sur les éléments de piste par deux portions extrême opposées.

6. Véhicule spatial selon la revendication 1, **caractérisé en ce que** chacun des sièges comprend une bordure périphérique s'étendant sur un pourtour et enveloppant l'occupant.

7. Véhicule spatial selon la revendication 1, **caractérisé en ce que** les sièges sont libres de tourner autour de la direction d'alignement (12).

8. Véhicule spatial selon la revendication 7, **caractérisé en ce que** chacun des sièges comprend un mécanisme de frein entre la pièce d'axe et la structure de support.

9. Véhicule spatial selon la revendication 7 ou 8, **caractérisé en ce que** chacun de sièges comprend un mécanisme d'arrêt pouvant être débrayé entre la pièce d'axe et la structure de support.

10. Véhicule spatial selon l'une quelconque des revendications 4 ou 5, **caractérisé en ce que** la piste comprend une portion postérieure (17) essentiellement verticale dans l'habitacle.

11. Véhicule spatial selon la revendication 10, **caractérisé en ce que** la piste comprend une portion inférieure (18) essentiellement horizontale dans l'habitacle.

12. Véhicule spatial selon la revendication 11, **caractérisé en ce que** la piste comprend une portion antérieure (19) oblique dans l'habitacle et jointe à la portion inférieure.

13. Véhicule spatial selon la revendication 12, **caractérisé en ce que** la direction d'alignement de la pièce d'axe admet des inclinaisons variant entre une inclinaison plutôt verticale qu'horizontale et une inclinaison essentiellement horizontale dans l'habitacle.

14. Véhicule spatial suivant l'une quelconque des revendications 7 à 13, **caractérisé en ce que** la direction d'alignement de la pièce d'axe de chacun des sièges fait un angle non nul avec un plan pendiculaire à la direction longitudinale du véhicule spatial.

15. Véhicule spatial suivant la revendication 14, **caractérisé en ce que** l'angle non nul est inférieur à 25°.

16. Véhicule spatial suivant la revendication 15, **caractérisé en ce que** l'angle non nul est supérieur à 15°.

17. Véhicule spatial suivant l'une quelconque des revendications 1, 7, 8 ou 9, **caractérisé en ce que** la direction d'alignement des axes de chacun des sièges est inclinée de 25° à 40° environ sur l'horizontale.

18. Véhicule spatial suivant la revendication 17, **caractérisé en ce que** la direction d'alignement des axes est inclinée de 35° environ sur l'horizontale.

19. Véhicule spatial suivant l'une quelconque des revendications 1 à 18, **caractérisé en ce qu'**il est un avion spatial.

## Patentansprüche

1. Raumfahrzeug, **dadurch gekennzeichnet, dass** es in einem Fahrgastraum mehrere Sitze umfasst, die jeweils umfassen: eine starre Schale (1), die sich von den Füßen bis zum Kopf eines den Sitz einnehmenden Insassen erstreckt, wenigstens ein Achsteil (9, 10) zum Eingreifen in eine Stützstruktur, wobei das Achsteil in einer Ausrichtungsrichtung (12) ausgerichtet ist, die im Wesentlichen parallel zu einer Längsrichtung des Insassen ist, und mit der Schale (1) durch ein Anschlussstück (11) verbunden ist, das derart gerichtet ist, dass sich der Insasse wenigstens im Wesentlichen zwischen der Schale und der Ausrichtungsrichtung des Achsteils befindet; wobei die Ausrichtungsrichtung des Achsteils im Wesentlichen senkrecht zur Längsrichtung des Raumfahrzeugs ist; und die Sitze im Fahrgastraum in der Längsrichtung des Raumfahrzeugs in einer einzigen Reihe ausgerichtet sind und seitensymmetrisch bezüglich einer vertikalen und den Fahrgastraum halbierenden Längsebene angeordnet sind.

2. Raumfahrzeug nach Anspruch 1, **dadurch gekennzeichnet, dass** die Sitzschale derart geformt ist, dass sich der Insasse in sitzender Stellung befindet.

3. Raumfahrzeug nach einem der Ansprüche 1 oder 2, **dadurch gekennzeichnet, dass** die Sitze zwei Achsteile (9, 10) umfassen, wobei die Achsteile fluchten und an zwei gegenüberliegenden Enden des Sitzes in der Längsrichtung des Insassen angeordnet sind.

4. Raumfahrzeug nach einem der Ansprüche 1 bis 3, **dadurch gekennzeichnet, dass** die Stützstruktur jedes der Sitze einen Schieber (13, 14) umfasst, der auf einer festen Bahn im Fahrzeug beweglich ist und auf der Bahn gehalten wird.

5. Raumfahrzeug nach Anspruch 4, **dadurch gekennzeichnet, dass** der bewegliche Schieber eine lang gestreckte Traverse ist, die Bahn doppelt ist und von zwei parallelen Elementen (15, 16) gebildet wird, wobei die Traverse eine der glatten Achsen in einem Abschnitt in der Mitte der Länge aufnimmt und auf den Bahnelementen jeweils durch zwei gegenüberliegende Endabschnitte gehalten wird.

6. Raumfahrzeug nach Anspruch 1, **dadurch gekennzeichnet, dass** jeder der Sitze einen Umfangsrand aufweist, der sich auf einem äußeren Umfang erstreckt und den Insassen umgibt.

7. Raumfahrzeug nach Anspruch 1, **dadurch gekennzeichnet, dass** sich die Sitze frei um die Ausrichtungsrichtung (12) drehen können.

8. Raumfahrzeug nach Anspruch 7, **dadurch gekennzeichnet, dass** jeder der Sitze einen Bremsmechanismus zwischen dem Achsteil und der Stützstruktur umfasst.

9. Raumfahrzeug nach Anspruch 7 oder 8, **dadurch gekennzeichnet, dass** jeder der Sitze einen Arretiermechanismus, der ausgerückt werden kann, zwischen dem Achsteil und der Stützstruktur umfasst.

10. Raumfahrzeug nach einem der Ansprüche 4 oder 5, **dadurch gekennzeichnet, dass** die Bahn einen im Fahrgastraum im Wesentlichen vertikalen hinteren Abschnitt (17) umfasst.

11. Raumfahrzeug nach Anspruch 10, **dadurch gekennzeichnet, dass** die Bahn einen im Fahrgastraum im Wesentlichen horizontalen unteren Abschnitt (18) umfasst.

12. Raumfahrzeug nach Anspruch 11, **dadurch gekennzeichnet, dass** die Bahn einen im Fahrgastraum schrägen und mit dem unteren Abschnitt verbundenen vorderen Abschnitt (19) umfasst.

13. Raumfahrzeug nach Anspruch 12, **dadurch gekennzeichnet, dass** die Ausrichtungsrichtung des Achsteils Neigungen gestattet, die zwischen einer mehr vertikalen als horizontalen Neigung und einer im Wesentlichen horizontalen Neigung im Fahrgastraum variieren.

14. Raumfahrzeug nach einem der Ansprüche 7 bis 13, **dadurch gekennzeichnet, dass** die Ausrichtungsrichtung des Achsteils jedes der Sitze einen von null verschiedenen Winkel mit einer zur Längsrichtung des Raumfahrzeugs senkrechten Ebene bildet.

15. Raumfahrzeug nach Anspruch 14, **dadurch gekennzeichnet, dass** der von null verschiedene Winkel kleiner als 25° ist.

16. Raumfahrzeug nach Anspruch 15, **dadurch gekennzeichnet, dass** der von null verschiedene Winkel größer als 15° ist.

17. Raumfahrzeug nach einem der Ansprüche 1, 7, 8 oder 9, **dadurch gekennzeichnet, dass** die Ausrichtungsrichtung der Achsen jedes der Sitze um ungefähr 25° bis 40° zur Horizontalen geneigt ist.

18. Raumfahrzeug nach Anspruch 17, **dadurch gekennzeichnet, dass** die Ausrichtungsrichtung der Achsen um ungefähr 35° zur Horizontalen geneigt ist.

19. Raumfahrzeug nach einem der Ansprüche 1 bis 28, **dadurch gekennzeichnet, dass** es ein Spaceplane ist.

## Claims

1. Space vehicle, **characterised in that** it comprises in a passenger compartment a plurality of seats, each comprising a rigid hull (1) extending from the feet to the head of an occupant of the seat, at least one part of axis (9, 10) to be engaged in a support structure, the part of axis being oriented in a direction of alignment (12) that is substantially parallel to a longitudinal direction of the occupant and connected to the hull (1) by a connector (11) directed in such a way that the occupant is at least substantially placed between the hull and the direction of alignment of the part of axis ; the direction of alignment of the part of axis is substantially perpendicular to the longitudinal direction of the space vehicle ; and said seats are aligned in the passenger compartment in the longitudinal direction of the space vehicle in a single row, and arranged symmetrically by halves in relation to a longitudinal, vertical and bisector plane of the passenger compartment.

2. Space vehicle according to claim 1, **characterised in that** the hull is formed in such a way that the occupant is in seated position.

3. Space vehicle according to any of claims 1 or 2, **characterised in that** the seats comprise two parts of axis (9, 10), the parts of axis being aligned and placed in two opposite ends of the seat in the longitudinal direction of the occupant.

4. Space vehicle according to any of claims 1 to 3, **characterised in that** the support structure of each of the seats comprises a mobile cursor (13, 14) on a fixed track in the vehicle and retained on the track.

5. Space vehicle according to claim 4, **characterised in that** the mobile cursor is an extended cross beam, the track is double and formed of two parallel elements (15, 16), the cross beam receiving one of the smooth axes in a mid-length portion and being respectively retained on the track elements by two opposite end portions.

6. Space vehicle according to claim 1, **characterised in that** each of the seats comprises a peripheral edge extending over a periphery and surrounding the occupant.

7. Space vehicle according to claim 1, **characterised in that** the seat is free to turn around the direction of alignment (12).

8. Space vehicle according to claim 7, **characterised in that** each of the seats comprises a braking mechanism between the axes and the support structure.

9. Space vehicle according to claim 7 or 8, **characterised in that** each of the seats comprises a stopping mechanism that can be disconnected between the axes and the support structure.

10. Space vehicle according to any of claims 4 to 5, **characterised in that** the track comprises a substantially vertical rear portion (17) in the passenger compartment.

11. Space vehicle according to claim 10, **characterised in that** the track comprises a substantially horizontal lower portion (18) in the passenger compartment.

12. Space vehicle according to claim 11, **characterised in that** the track comprises an oblique front portion (19) in the passenger compartment and attached to the lower portion.

13. Space vehicle according to claim 12, **characterised in that** the direction of alignment of the part of axis allows for inclinations varying between an inclination that is rather vertical than horizontal and a substantially horizontal inclination in the passenger compartment.

14. Space vehicle according to any of claims 7 to 13, **characterised in that** the direction of alignment of the part of axis forms a non-zero angle with a plane perpendicular to the longitudinal direction of the space vehicle.

15. Space vehicle according to claim 14, **characterised in that** the non-zero angle is less than 25°.

16. Space vehicle according to claim 15, **characterised in that** the non-zero angle is greater than 15°.

17. Space vehicle according to any of claims 1, 7, 8 or 9, **characterised in that** the direction of alignment of the axes is inclined by approximately 25° to 40° on the horizontal.

18. Space vehicle according to claim 17, **characterised in that** the direction of alignment of the axes is inclined by approximately 35° on the horizontal.

19. Space vehicle according to any one of claims 1 to 18, **characterised in that** it is a space plane.
